# EUROPEAN PATENT APPLICATION

(11) **EP 3 147 780 A1**
(43) Date of publication of application: **29.03.2017**
(21) Application number: 15811807.5
(22) Date of filing: 04.03.2015
(51) Int. Cl.: G06F 9/445

(54) **METHOD FOR DYNAMICALLY UPDATING INTERFACE OF APPLICATION, TERMINAL AND SYSTEM**

(30) Priority: 27.06.2014 CN 201410300640
(71) Applicant: ZTE Corporation, Shenzhen, Guangdong 518057 (CN)
(72) Inventor: ZHOU, Weimin, Shenzhen Guangdong 518057 (CN); WANG, Bin, Shenzhen Guangdong 518057 (CN)
(74) Representative: Benson, Christopher
(86) International application number: PCT/CN2015/073638
(87) International publication number: WO 2015/196828

(57) **Abstract**

Disclosed is a method for dynamically updating an interface of an application. The method includes: when an application is enabled, a terminal obtaining interface configuration information of the application in local and interface configuration information of the application on a server end; determining whether the interface of the application needs to be updated according to the obtained interface configuration information of the application in the local and interface configuration information of the application on the server end; when determining that the interface of the application needs to be updated, using the interface configuration information of the application on the server end to update the interface configuration information of the application in the local of the terminal, and drawing the interface of the application according to the updated interface configuration information. Also disclosed are a terminal, a dynamic updating system and a computer readable storage medium.

## Description

### Technical Field

The present invention relates to online generating technologies for an interface of an application, and more particularly, to a method, a terminal and a system for dynamically updating an interface of an application.

### Background

At present, interfaces of terminal applications are mainly made by professional software developers, and the style and content of an interface of an application are customized according to application requirements when making the interface of the application.

A scheme for updating an interface of an application in the existing technology has at least the following drawbacks:
in the existing art, the technical staff needs to understand and master professional web basics when making an interface of an application; and, in the process of using a terminal application, the style and content of the interface of the application cannot be modified or updated in real time, only a more advanced version of the application can be downloaded to replace the current version to achieve updating for the interface of the application.

Thus, there is an urgent need for a solution to dynamically update the interface of the application.

### Summary of the Invention

To solve the technical problem in the existing technology, an embodiment of the present invention is expected to provide a method, a terminal, and a system for dynamically updating an interface of an application.

In order to achieve the abovementioned objective, the technical solution of an embodiment of the present invention is implemented as follows.

An embodiment of the present invention provides a method for dynamically updating an interface of an application, and the method includes:
when an application is enabled, a terminal obtaining interface configuration information of the application in local and interface configuration information of the application on a server end;
determining whether the interface of the application needs to be updated according to the obtained interface configuration information of the application in the local and the obtained interface configuration information of the application on the server end;
when determining that the interface of the application needs to be updated, using the interface configuration information of the application on the server end to update the interface configuration information of the application in the local of the terminal, and drawing the interface of the application according to updated interface configuration information.

In the abovementioned scheme, the interface configuration information includes a name, a position, a height and a width of each control, whether to focus, whether to select a default focus, associated controls, a name and a link address of a resource in use, a type and a link address of a triggered action, and a timestamp.

In the abovementioned scheme, said determining whether the interface of the application needs to be updated according to the obtained interface configuration information of the application in the local and the obtained interface configuration information of the application on the server end includes:
comparing a timestamp in the interface configuration information of the application in the local with a timestamp in the interface configuration information of the application on the server end;
if the timestamp in the interface configuration information of the application on the server end is behind the timestamp in the interface configuration information of the application in the local, determining that the interface of the application needs to be updated;
if the timestamp in the interface configuration information of the application on the server end is before the timestamp in the interface configuration information of the application in the local, or the timestamp in the interface configuration information of the application on the server end and the timestamp in the interface configuration information of the application in the local are same, determining that the interface of the application does not need to be updated.

In the abovementioned scheme, said drawing the interface of the application according to updated interface configuration information includes:
analyzing the updated interface configuration information according to a preset component mapping rule, and converting the updated interface configuration information into interface drawing components and parameters supported by the application;
drawing the interface of the application according to the interface drawing components and parameters.

The embodiment of the present invention further provides a terminal, including an obtaining unit, a determining unit, and an interface drawing unit; herein,
the obtaining unit is arranged to: when an application is enabled, obtain interface configuration information of the application in local and interface configuration information of the application on a server end;
the determining unit is arranged to determine whether the interface of the application needs to be updated according to the obtained interface configuration information of the application in the local and the obtained interface configuration information of the application on the server end;
the interface drawing unit is arranged to, when the determining unit determines that the interface of the application needs to be updated, use the interface configuration information of the application on the server end to update the interface configuration information of the application in the local of the terminal, and draw the interface of the application according to updated interface configuration information.

In the abovementioned scheme, the interface configuration information includes a name, a position, a height and a width of each control, whether to focus, whether to select a default focus, associated controls, a name and a link address of a resource in use, a type and a link address of a trigged action, and a timestamp.

In the abovementioned scheme, the determining unit is arranged to:
compare a timestamp in the interface configuration information of the application in the local with a timestamp in the interface configuration information of the application on the server end;
if the timestamp in the interface configuration information of the application on the server end is behind the timestamp in the interface configuration information of the application in the local, determine that the interface of the application needs to be updated;
if the timestamp in the interface configuration information of the application on the server end is before the timestamp in the interface configuration information of the application in the local, or the timestamp in the interface configuration information of the application on the server end and the timestamp in the interface configuration information of the application in the local are same, determine that the interface of the application does not need to be updated.

In the abovementioned scheme, the interface drawing unit is arranged to:
analyze the updated interface configuration information according to a preset component mapping rule, and convert the updated interface configuration information into interface drawing components and parameters supported by the application;
draw the interface of the application according to the interface drawing components and parameters.

The embodiment of the present invention further provides a dynamic updating system, including a browser end, a server end and a terminal; herein,
the browser end is arranged to perform a visual layout on an interface of an application;
the server end is arranged to generate interface configuration information for the interface of the application on which the visual layout is performed and store the interface configuration information, and provide the stored interface configuration information of application that is needed to the terminal when the terminal needs the configuration information;
the terminal is arranged to, when an when application is enabled, obtain interface configuration information of the application in local and the interface configuration information of the application on the server end; determine whether the interface of the application needs to be updated according to the obtained interface configuration information of the application in the local and the obtained interface configuration information of the application on the server end; when determining that the interface of the application needs to be updated, use the interface configuration information of the application on the server end to update the interface configuration information of the application in the local of the terminal, and draw the interface of the application according to updated interface configuration information.

The embodiment of the present invention further provides a computer readable storage medium, and the storage medium includes a set of computer executable instructions used for executing the method for dynamically updating an interface of an application at a terminal side.

In the method for dynamically updating an interface of an application, a terminal and a system thereof provided in the embodiment of the present invention, when an application is enabled, the terminal obtains the interface configuration information of the application in local and the interface configuration information of the application on the server end; determines whether the interface of the application needs to be updated according to the obtained interface configuration information of the application in the local and the interface configuration information of the application on the server end, and when determining that the interface of the application needs to be updated, updates the interface configuration information of the application in the local of the terminal by using the interface configuration information of the application on the server end, and draw the interface of the application according to the updated interface configuration information. Thus, the terminal in the embodiment of the present invention can conveniently update the interface of the application in real time according to the interface configuration information obtained from the server end, thereby improving the user experience.

### Brief Description of the Drawings

FIG. 1 is a schematic diagram of the structure of a dynamic updating system in accordance with an embodiment of the present invention;
FIG. 2 is a schematic diagram of an implementation process of a method for dynamically updating an interface of an application in accordance with an embodiment of the present invention;
FIG. 3 is a schematic diagram of a component structure of a terminal in accordance with an embodiment of the present invention.

### Specific Embodiments

In the system for dynamically updating an interface of an application in accordance with the embodiment of the present invention, the system mainly includes: a browser end, a server end and a terminal; in the system, a visual layout of the interface of the application is based on the structure of a browser/server (B/S), firstly, is visual layout is performed online on the interface of the application by the browser, then the server end generates interface configuration information from the visual layout interface of the application and stores the interface configuration information, and the interface configuration information can describe the layout and configuration of the interface of the application;

the terminal obtains the interface configuration information of the application in the local and the interface configuration information of the application on the server end when the application is enabled; determines whether the interface of the application needs to be updated according to the obtained interface configuration information of the application in the local and the interface configuration information of the application on the server end, and when determining that the interface of the application needs to be updated, updates the interface configuration information of the application in the local of the terminal by using the interface configuration information of the application on the server end, and draws the interface of the application according to the updated interface configuration information.

Herein, the initial interface configuration information in the local of the terminal is configured by professional software developers according to the application requirements.

In the embodiment of the present invention, the terminal may be an intelligent terminal having intelligent applications and the function of display, and may be intelligent terminals such as an over-the-top TV (OTT TV), a smart phone or a tablet computer.

Hereinafter, specific embodiments of the present invention will be described with reference to the accompanying drawings.

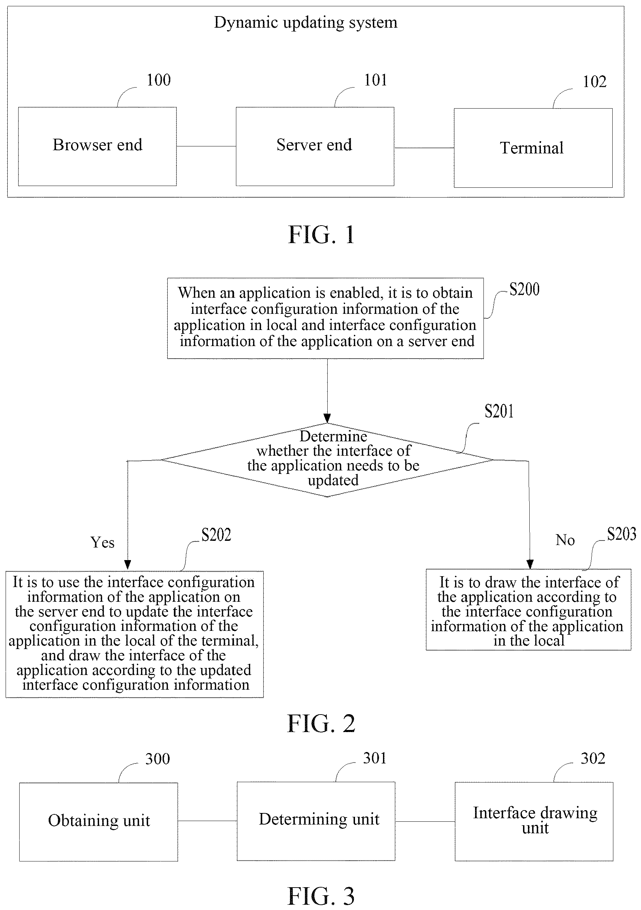

FIG. 1 is a schematic diagram of the component structure of a dynamic updating system provided in an embodiment of the present invention, as shown in FIG. 1, the system includes browser end 100, server end 101, and terminal 102; herein,
the browser end 100 is arranged to perform a visual layout on an interface of an application,
the server end 101 is arranged to generate interface configuration information from the interface of the application on which the visual layout is performed and store the interface configuration information, and provide the terminal 102 with the stored interface configuration information of the needed application when the terminal 102 needs interface configuration information;
the terminal 102 is arranged to obtain the interface configuration information of the application in the local and the interface configuration information of the application on the server end 101 when the application is enabled; determine whether the interface of the application needs to be updated according to the obtained interface configuration information of the application in the local and the interface configuration information of the application on the server end 101, and when determining that the interface of the application needs to be updated, update the interface configuration information of the application in the local by using the interface configuration information of the application on the server end 101; and draw the interface of the application according to the updated interface configuration information.

In practical applications, the browser end 100 and the server end 101 may be integrated in one hardware device or may be distributed in different hardware devices.

Based on the abovementioned system architecture, FIG. 2 shows a flow chart of dynamically updating an interface of an application provided in an embodiment of the present invention, and the specific implementation steps include.

In step S200: when an application is enabled, a terminal obtains interface configuration information of the application in the local and interface configuration information of the application on a server end;
in this step, a visual layout is performed on the interface of the application based on the B/S architecture, first the visual layout is performed on the interface of the application by the browser 100 in a grid positioning manner or in an absolute positioning manner; then, the server end 101 generates interface configuration information for the application on which the visual layout is performed and stores it. The specific implementation is as follows:
first, visual layout is performed on the interface of the application in the browser end 100 in a grid positioning manner or in an absolute positioning manner/

Herein, available controls available for making the visual layout include: a image playing control, a video playing control, a text list control, and the like; in particular, the image playing control is presented as a image display frame, the image playing control can accommodate multiple images, and each image corresponds to one link address; after the image playback control is triggered, a image is linked through the link address of the image and the image starts to be played, moreover, an automatic loop play or a manual switch play of multiple images is supported.

Moreover, the image playing control may be associated with the text list control, the user switches the images in the image playing control by selecting text in the text list control; the video playing control is presented as a video playing frame, the video playing control is similar to the image playing control and can accommodate a plurality of videos, each video corresponds to one link address, and the link address of the background image displayed before the video starts to be played can be preset, the background image is linked through the link address of the background image and then the background image is displayed; after being triggered, the video playing control links to a video through the link address of the video and starts playing the video, and it supports an automatic loop play or a manual switch play of multiple videos.

The video playback control may also be associated with the text list control, the user switches the video in the video playback control by selecting text in the text list control; the text list control is presented as a text list and typically is worked with the image playback control or the video playback control; when visual layout is performed on the interface of the application, the user may also use a customized control which can be defined according to the requirements of the interface of the application, and the customized content works as a plug-in widget dynamically loaded into the box of the customized control; after being triggered, the customized control links to the customized content through the link address of the customized content and plays the customized content.

In addition, each control may also be provided with a plurality of triggered actions which may be set as jumping to another interface of the application, for example, after the user clicks on the text content in the text list control on the interface, it jumps to another interface associated with the textual content in the application;

After the browser end 100 completes the visual layout on the interface of the application, the server end 101 generates interface configuration information from the interface of the application on which the visual layout is performed through the Extensible Markup Language (XML), herein the interface configuration information includes the name, position, height and width of each control, whether to focus, whether to select a default focus, associated controls, the name and link address of the resource in use, the type and link address of a triggered action, the current time stamp, and the like, and the interface configuration information is stored in an XML file; then, the server end 101 provides a downloading service to the terminal.

Herein, the server end 101 may generate corresponding interface configuration information for each application respectively and store the interface configuration information corresponding to each application into a corresponding XML file;
the server end 101 may re-generate the interface configuration information from interface of the application on which the latest visual layout is performed according to a set time interval or a set frequency, and update the corresponding XML file.

Herein, the controls in the interface of the application on which visual layout is performed are positioned in a Cascading Style Sheet (CSS), and the CSS is a computer language used to represent file styles such as HyperText Markup Language (HTML) or XML; the position of a control is positioned by the distance Top of the control from the upper edge of the interface of the application and the distance of the control from the left edge of the interface of the application, and the size of the control is determined by the height and width of the control.

Herein, the CSS in use is marked as follows:
the CSS used by the distance top from the left top edge of the control to the top margin of the interface of the application is marked as margin-top;
the CSS used by the distance left from the left top edge of the control to the left margin of the interface of the application is marked as margin-left;
the CSS used by the width of the control is marked as width;
the CSS used by the height of the control is marked as height;
then, when an application is enabled, the terminal obtains the interface configuration information of the application stored in the local, as well as the interface configuration information of the application stored on the server end 101.

In an embodiment of the present invention, the browser end 100 performs visual layout on the interface of the application so that the user can design the interface of the application through the visual interface and controls without needing to understand and master the professional web basics, and the operation is convenient and the interface is easy to be modified; furthermore, the terminal can obtain the interface configuration information of the application from the server end 101 in real time when the application is enabled, so as to automatically and update the interface of the application in real time.

In step S201: it is to determine whether the interface of the application needs to be updated according to the obtained interface configuration information of the application in the local and the interface configuration information of the application on the server end, when determining that the interface of the application needs to be updated, it is to proceed to step 202; when determining that the interface of the application does not need to be updated, it is to proceed to step 203.

The interface configuration information includes a timestamp, and the timestamp is used to record the time for generating the interface configuration information, correspondingly, said determining is comparing the timestamp in the interface configuration information of the application in the local with the timestamp in the interface configuration information of the application on the server end 101.

If the timestamp in the interface configuration information of the application in the server end 101 is behind the timestamp in the interface configuration information of the application in the local, it is to determine that the interface of the application needs to be updated;
if the timestamp in the interface configuration information of the application on the server end 101 is before the timestamp in the interface configuration information of the application in the local, or the timestamp in the interface configuration information of the application on the server end 101 and the timestamp in the interface configuration information of the application in the local are same, it is to determine that the interface of the application does not need to be updated.

In step S202: it is to use the interface configuration information of the application on the server end 101 to update the interface configuration information of the application in the local of the terminal, and to draw the interface of the application according to the updated interface configuration information, and end this processing procedure.

It is to analyze the updated interface configuration information according to a preset component mapping rule, and convert the updated interface configuration information into interface drawing components and parameters supported by the application, and draw the interface of the application according to the interface rendering components and parameters, so as to update the interface of the application in real time and enhance the user experience.

In step S203: it is to draw the interface of the application according to the interface configuration information of the application in the local of the terminal.

It is to analyze the updated interface configuration information of the application in the local according to a preset component mapping rule, convert the interface configuration information of the application in the local into interface drawing components and parameters supported by the application, draw the interface of the application according to the interface rendering components and parameters, and end this processing procedure.

In the following, installing the Android system in a terminal is taken for example, the preset component mapping rule is as follows:
convert the margin-top in the CSS tag into Android: layout_alignParentTop;
convert the margin-left in the CSS tag into Android: layout_afignParentLeft;
convert the width in the CSS tag into Android: width;
convert the height in CSS tag into Android: height.

In the embodiment of the present invention, the visual layout is performed on the interface of the application on the browser end, and interface configuration information which can describe the layout and configuration of the interface of the application is generated and stored on the server end in real time, and the terminal obtains the interface configuration information of the application in the local as well as the interface configuration information of the application on the server end when the application is enabled; it is to determine whether the interface of the application needs to be updated according to the obtained interface configuration information of the application in the local and the interface configuration information of the application in the server end; when determining that the interface of the application needs to be updated, it is to update the interface configuration information of the application in the local of the terminal by using the interface configuration information of the application in the server end, and draw the interface of the application according to the updated interface configuration information. In this way, when the application is enabled, the terminal in the embodiment of the present invention conveniently updates the interface of the application in real time according to the interface configuration information of the application obtained from the server end, thereby improving the user experience.

In order to implement the abovementioned method, the embodiment of the present invention further provides a terminal, and since the principle and method of the terminal solving the problem are similar, the implementation process and the implementation principle of the terminal can refer to the description of the implementation process and the implementation principle of the method, and are not repeated herein.

As shown in FIG. 3, the terminal provided in an embodiment of the present invention includes obtaining unit 300, determining unit 301 and interface drawing unit 302; herein,
the obtaining unit 300 is arranged to: when an application is enabled, obtain interface configuration information of the application in the local and interface configuration information of the application on a server end;
the determining unit 301 is arranged to determine whether the interface of the application needs to be updated according to the obtained interface configuration information of the application in the local and the obtained interface configuration information of the application on the server end;
the interface drawing unit 302 is arranged to, when the determining unit 301 determines that the interface of the application needs to be updated, update the interface configuration information of the application in the local of the terminal by using the interface configuration information of the application on the server end, and draw the interface of the application according to the updated interface configuration information.

The division method of the above functional units or modules is only an alternative implementation method provided in the embodiment of the present invention, and the division method of the functional units or modules are not construed as limiting the present invention.

In specific implementations, the interface configuration information includes the name, position, height and width of each control, whether to focus, whether to select the default focus, associated controls, the name and link address of the resource in use, the type and link address of a triggered action, and a timestamp.

In a specific implementation, the determining unit 301 is arranged to:
compare the timestamp in the interface configuration information of the application in the local with the timestamp in the interface configuration information of the application on the server end;
if the timestamp in the interface configuration information of the application on the server end is behind the timestamp in the interface configuration information of the application in the local, determine that the interface of the application needs to be updated;
if the timestamp in the interface configuration information of the application on the server end is before the timestamp in the interface configuration information of the application in the local or the timestamp in the interface configuration information of the application on the server end and the timestamp in the interface configuration information of the application in the local are same, determine that the interface of the application does not need to be updated.

In a specific implementation, the interface drawing unit 302 is arranged to:
analyze the updated interface configuration information according to a preset component mapping rule, and convert the updated interface configuration information into interface drawing components and parameters supported by the application;
draw the interface of the application according to the interface drawing components and parameters.

In practical applications, the obtaining unit 300, the determining unit 301 and the interface drawing unit 302 may be implemented by a central processing unit (CPU), a microprocessor (MPU), a digital signal processor (DSP) or a Field Programmable Gate Array (FPGA) located in the terminal.

The embodiment of the present invention further provides a computer readable storage medium, and the storage medium includes a set of computer executable instructions used for executing the method for dynamically updating an interface of an application in the terminal.

The method in the present invention is not limited to the examples described in the specific embodiments. Other embodiments can be obtained by those stilled in the art according to the technical scheme of the present invention, and should be within the scope of the technical innovation of the present invention.

It will be apparent that those skilled in the art can make various changes and modifications in the present invention without departing from the spirit and scope of the present invention. Thus, if these changes and modifications of the present invention belong to the scope of the appended claims and their equivalents of the present invention, the present invention is construed as including these changes and modifications.

## Claims

1. A method for dynamically updating an interface of an application, wherein, the method comprises:
when an application is enabled, a terminal obtaining interface configuration information of the application in local and interface configuration information of the application on a server end;
determining whether the interface of the application needs to be updated according to the obtained interface configuration information of the application in the local and the obtained interface configuration information of the application on the server end;
when determining that the interface of the application needs to be updated, using the interface configuration information of the application on the server end to update the interface configuration information of the application in the local of the terminal, and drawing the interface of the application according to updated interface configuration information.

2. The method of claim 1, wherein, the interface configuration information includes a name, a position, a height and a width of each control, whether to focus, whether to select a default focus, associated controls, a name and a link address of a resource in use, a type and a link address of a triggered action, and a timestamp.

3. The method of claim 2, wherein, said determining whether the interface of the application needs to be updated according to the obtained interface configuration information of the application in the local and the obtained interface configuration information of the application on the server end comprises:
comparing a timestamp in the interface configuration information of the application in the local with a timestamp in the interface configuration information of the application on the server end;
if the timestamp in the interface configuration information of the application on the server end is behind the timestamp in the interface configuration information of the application in the local, determining that the interface of the application needs to be updated;
if the timestamp in the interface configuration information of the application on the server end is before the timestamp in the interface configuration information of the application in the local, or the timestamp in the interface configuration information of the application on the server end and the timestamp in the interface configuration information of the application on the local are the same, determining that the interface of the application does not need to be updated.

4. The method of claim 1, wherein, said drawing the interface of the application according to updated interface configuration information comprises:
analyzing the updated interface configuration information according to a preset component mapping rule, and converting the updated interface configuration information into interface drawing components and parameters supported by the application;
drawing the interface of the application according to the interface drawing components and parameters.

5. A terminal, comprising an obtaining unit, a determining unit, and an interface drawing unit; wherein,
the obtaining unit is arranged to: when an application is enabled, obtain interface configuration information of the application in local and interface configuration information of the application on a server end;
the determining unit is arranged to determine whether an interface of the application needs to be updated according to the obtained interface configuration information of the application in the local and the obtained interface configuration information of the application on the server end;
the interface drawing unit is arranged to, when the determining unit determines that the interface of the application needs to be updated, use the interface configuration information of the application on the server end to update the interface configuration information of the application in the local of the terminal, and draw the interface of the application according to updated interface configuration information.

6. The terminal of claim 5, wherein, the interface configuration information comprises a name, a position, a height and a width of each control, whether to focus, whether to select a default focus, associated controls, a name and a link address of a resource in use, a type and a link address of a triggered action, and a timestamp.

7. The terminal of claim 6, wherein, the determining unit is arranged to:
compare a timestamp in the interface configuration information of the application in the local with a timestamp in the interface configuration information of the application on the server end;
if the timestamp in the interface configuration information of the application on the server end is behind the timestamp in the interface configuration information of the application in the local, determine that the interface of the application needs to be updated;
if the timestamp in the interface configuration information of the application on the server end is before the timestamp in the interface configuration information of the application in the local, or the timestamp in the interface configuration information of the application on the server end and the timestamp in the interface configuration information of the application in the local are same, determine that the interface of the application does not need to be updated.

8. The terminal of claim 5, wherein, the interface drawing unit is arranged to:
analyze the updated interface configuration information according to a preset component mapping rule, and convert the updated interface configuration information into interface drawing components and parameters supported by the application;
draw the interface of the application according to the interface drawing components and parameters.

9. A dynamic updating system, comprising a browser end, a server end and a terminal; wherein,
the browser end is arranged to perform a visual layout on an interface of an application;
the server end is arranged to generate interface configuration information for the interface of the application on which the visual layout is performed and store the interface configuration information, and when the terminal needs interface configuration information, provide the stored interface configuration information of the application that is needed to the terminal;
the terminal is arranged to, when the application is enabled, obtain interface configuration information of the application in local and the interface configuration information of the application on the server end; determine whether the interface of the application needs to be updated according to the obtained interface configuration information of the application in the local and the obtained interface configuration information of the application on the server end; when determining that the interface of the application needs to be updated; using the interface configuration information of the application on the server end to update the interface configuration information of the application in the local of the terminal, and draw the interface of the application according to the updated interface configuration information.

10. A computer readable storage medium, comprising a set of computer executable instructions, wherein the instructions is used for executing the method for dynamically updating an interface of an application of any one of claims 1-4.
